# EUROPEAN PATENT SPECIFICATION

(11) **EP 1 826 461 B1**
(45) Date of publication and mention of the grant of the patent: **01.12.2010**
(21) Application number: 07250768.4
(22) Date of filing: 23.02.2007
(51) Int. Cl.: F16H 61/02, F16H 61/10, F16H 63/42

(54) **Gear shift instruction device and gear shift instruction method**
Getriebeschaltbefehlsvorrichtung und Getriebeschaltbefehlsverfahren
Dispositif d'instruction de levier de vitesse et procédé d'instruction de levier de vitesse

(30) Priority: 27.02.2006 JP 2006050306
(43) Date of publication of application: 29.08.2007
(73) Proprietor: Toyota Jidosha Kabushiki Kaisha, Toyota-shi, Aichi-ken, 471-8571 (JP)
(72) Inventor: Kinoshita, Tomonori, Toyota-shi, Aichi-ken 471-8571 (JP); Ohkubo,Tadanao, Toyota-shi, Aichi-ken 471-8571 (JP)
(74) Representative: Albutt, Anthony John

(56) References cited:
- EP-A- 1 253 354
- DE-A1- 3 128 080
- US-A- 4 539 868
- US-A- 4 723 215

## Description

### BACKGROUND OF THE INVENTION

### Field of the Invention

The present invention relates to a gear shift instruction device and a gear shift instruction method instructing a gear shift operation, and particularly to a gear shift instruction device and a gear shift instruction method for providing an instruction for gear shift operation to a driver appropriately in accordance with a running state of a vehicle.

### Description of the Background Art

Conventionally, there is disclosed a gear shift operation device instructing a gear shift operation to a driver based on the relation between the accelerator pedal opening degree and the vehicle speed or the throttle opening degree. For example, an optimum shift position display device disclosed in Japanese Utility Model Laying-Open No. 59-006529, which represents the closest prior art and discloses the features and method steps according to the preamble of claims 1 or 6, is for an automobile provided with a manual transmission, and includes: a vehicle speed sensor detecting a vehicle speed; a throttle position sensor detecting an opening degree of an engine throttle; a shift position sensor detecting a shift position of the transmission; a steering wheel position sensor detecting an angular position of the steering wheel; and a controller that determines a shift position in an ideal state based on the detected data from the vehicle speed sensor and the throttle position sensor, compares the current shift position with the shift position in the ideal state, displays on display means an optimum shift position in accordance with a state by determining whether it is in a speed-increasing state or a speed-reducing state based on detected data from a vacuum sensor, and prohibits a change of display of the shift position when the steering wheel of the automobile is being turned to follow a curved road based on the detected data from the steering wheel position sensor.

According to the optimum shift position display device disclosed in the above-described publication, the driver can set the shift position to an optimum state in accordance with the display, to draw out the inherent performance of the vehicle and thus to ensure comfortable driving with good mileage.

The optimum shift position display device described above, however, poses a problem that it is not possible to instruct a gear shift operation appropriately along with the driver's intention of gear shifting. In a vehicle incorporating a manual transmission, there is a case where the accelerator pedal position approaches a fully closed state at the time of gear shifting, since the driver releases the accelerator pedal. Thus, if the instruction for gear shift operation is to be issued to the driver based on the relation between the accelerator pedal opening degree and the vehicle speed or the throttle opening degree, the instruction for gear shift operation to the speed-increasing side may be issued immediately after completion of the gear shifting to the speed-reducing side, because of the fully closed state of the accelerator pedal position. Such issuance of the instruction for gear shift operation to the speed-increasing side despite the fact that the driver has intentionally made a gear shift operation to the speed-reducing side in order to accelerate the vehicle, may give the driver uncomfortable feeling about the instruction for gear shift operation.

US 4539868 and US 4723215 both disclose systems arranged to indicate if an up-shift or down-shift should be made based on engine load and fuel economy.

### SUMMARY OF THE INVENTION

An embodiment of the invention can provide a gear shift instruction device and a gear shift instruction method suppressing an instruction for gear shift operation against the intention of the driver.

A gear shift instruction device according to an embodiment of the present invention instructs to a driver a gear shift operation for a transmission mechanism that is mounted on a vehicle and allows gear shifting during a forward running in accordance with an operation of the driver. The transmission mechanism is either one of a manual transmission mechanism and an automatic transmission mechanism having a manual shift mode. The gear shift instruction device includes: an instruction unit that instructs a gear shift operation of the transmission mechanism to the driver; and a control unit that generates a gear shift command signal corresponding to a state of the vehicle using a gear shift diagram and controls the instruction unit to instruct a gear shift operation to either a speed-increasing side or a speed-reducing side of the transmission mechanism based on the generated gear shift command signal. The control unit determines presence or absence of gear shifting to the speed-reducing side and prohibits the instruction of the gear shift operation to the speed-increasing side, from a timing at which it is determined that the gear has been shifted to the speed-reducing side, until a predetermined time passes therefrom.

In an embodiment of the invention, the control unit can prohibit the instruction of gear shift operation to the speed-increasing side (up-shift instruction), from the time when it is determined that the gear has been shifted to the speed-reducing side, until a predetermined time passes therefrom. As such, when the vehicle is gear shifted (down-shifted) to the speed-reducing side during acceleration, even if the position on the gear shift diagram corresponding to the vehicle state shifts to the up-shift side across the up-shift line because the accelerator pedal position becomes the fully closed state, the instruction of gear shift operation to the speed-increasing side is prohibited until a predetermined time passes. That is, the driver would not be instructed to change gear to the speed-increasing side after he/she operates the transmission mechanism to intentionally change it to the speed-reducing side. This prevents the driver from feeling uncomfortable about the instruction for gear shift operation. Further, the instruction of gear shift operation to the speed-increasing side is permitted after a lapse of the predetermined time. Thus, after completion of the gear shift operation, when the accelerator pedal position is returned to the position before the gear shifting, an appropriate instruction for gear shift operation can be provided to the driver in accordance with the state of the vehicle. Accordingly, it is possible to provide a gear shift instruction device suppressing an instruction for gear shift operation against the intention of the driver.

The gear shift instruction device can further include a gear shift detection unit that detects a gear shift state in the transmission mechanism. The control unit can prohibit the instruction of the gear shift operation to the speed-increasing side, from the timing at which it is determined that the gear has been shifted to the speed-reducing side based on a detected result of the gear shift detection unit, until the predetermined time passes therefrom.

In such an embodiment of the invention, the control unit can prohibit the instruction of gear shift operation to the speed-increasing side (up-shift instruction), from the timing when it is determined that the gear has been shifted to the speed-reducing side based on a detected result of the gear shift state, until a predetermined time passes therefrom. As such, even if the position on the gear shift diagram corresponding to the vehicle state shifts to the up-shift side across the up-shift line and thus the vehicle attains the state in which the up-shift instruction may be issued, because the accelerator pedal position becomes the fully closed state when the vehicle is gear shifted (down-shifted) to the speed-reducing side during acceleration or the like, the instruction of gear shift operation to the speed-increasing side is prohibited. That is, the driver would not be instructed to change gear to the speed-increasing side after he/she operates the transmission mechanism to intentionally change it to the speed-reducing side. This prevents the driver from feeling uncomfortable about the instruction for gear shift operation during acceleration of the vehicle. Further, the instruction of gear shift operation to the speed-increasing side can be permitted after a lapse of the predetermined time. Thus, after completion of the gear shift operation, when the accelerator pedal position is returned to the position before the gear shifting, an appropriate instruction for gear shift operation can be provided to the driver in accordance with the state of the vehicle. Accordingly, it is possible to provide a gear shift instruction device suppressing an instruction for gear shift operation against the intention of the driver.

The gear shift instruction device can further include a detection unit that detects a degree of demand for a driving force to the vehicle by the driver. The control unit can permit the instruction of the gear shift operation to the speed-increasing side when an absolute value of a difference between the degree of demand detected by the detection unit and the degree of demand before the gear shifting becomes not greater than a predetermined degree before the predetermined time passes from the timing at which it is determined that the gear has been shifted to the speed-reducing side based on the detected result of the gear shift detection unit.

In such an embodiment of the invention, the control unit can permit the instruction of gear shift operation to the speed-increasing side when the absolute value of the difference between the detected degree of demand (for example, accelerator pedal opening degree) and the degree of demand before the gear shifting is the predetermined degree or less, before the predetermined time passes from the timing of determination that the gear has been shifted to the speed-reducing side based on the detected result of the gear shift state. The state where the absolute value of the difference between the degree of demand after the gear shifting and the degree of demand before the gear shifting becomes not greater than the predetermined degree corresponds to the state where the degrees of demand before and after the gear shifting are approximately equal to each other. That is, the degree of demand after the gear shifting is approximately the same as the degree of demand before the gear shifting. If the instruction of gear shift operation to the speed-increasing side is prohibited at this time point, the relevant instruction may be delayed. Thus, the instruction of gear shift operation to the speed-increasing side is permitted when the degree of demand after the gear shifting becomes approximately the same as that before the gear shifting, to thereby restrict a delay in instruction of the gear shift operation to the speed-increasing side. Accordingly, it is possible to provide an appropriate instruction for gear shift operation to the driver in accordance with the state of the vehicle.

The control unit can be arranged to prohibit the instruction of the gear shift operation to the speed-increasing side when a change rate of the degree of demand detected by the detection unit becomes not less than a predetermined change rate before the predetermined time passes from the timing at which it is determined that the gear has been shifted to the speed-reducing side based on the detected result of the gear shift detection unit, even if the absolute value of the difference between the degree of demand detected by the detection unit and the degree of demand before the gear shifting is not greater than the predetermined degree.

In such an embodiment of the invention, the control unit can prohibit the instruction of the gear shift operation to the speed-increasing side when the change rate of the degree of demand detected (for example, accelerator pedal opening degree) is equal to or greater than the predetermined change rate, before the predetermined time passes from the timing of determination that the gear has been shifted to the speed-reducing side based on the detected result of the gear shift state. The state where the change rate of the degree of demand detected is not less than the predetermined change rate after detection of the gear shifting to the speed-reducing side, even if the detected degree of demand is not greater than the predetermined degree, corresponds to the state in which the driver intends to further accelerate the vehicle by increasing the depressed amount of the accelerator pedal. Thus, the instruction for gear shift operation to the speed-increasing side in this state is against the driver's intention to accelerate the vehicle. If the up-shift instruction is issued, the driver may feel uncomfortable about the instruction of the gear shift operation. Accordingly, the instruction of the gear shift operation to the speed-increasing side is prohibited when the change rate of the degree of demand is not less than the predetermined change rate, which can suppress an instruction for gear shift operation contrary to the intention of the driver.

The transmission mechanism can be an automatic transmission mechanism having a manual shift mode. The gear shift instruction device can further include a detection unit that detects a degree of demand for a driving force to the vehicle by the driver. The control unit can permit the instruction of the gear shift operation to the speed-increasing side when the degree of demand detected by the detection unit is smaller than a predetermined degree before the predetermined time passes from the timing at which it is determined that the gear has been shifted to the speed-reducing side based on the detected result of the gear shift detection unit.

In such an embodiment of the invention, the control unit can permit the instruction of the gear shift operation to the speed-increasing side when the detected degree of demand is smaller than the predetermined degree before the predetermined time passes from the timing of determination that the gear has been shifted to the speed-reducing side. In the automatic transmission mechanism having a manual shift mode, it is unnecessary to return the degree of demand for driving force (for example, accelerator pedal opening degree), unlike the case of the manual transmission mechanism. Thus, when the degree of demand is smaller than the predetermined degree, it can be determined that the driver does not intend to accelerate the vehicle. Accordingly, in such a case, the instruction for gear shift operation to the speed-increasing side is permitted to thereby provide an appropriate instruction for gear shift operation to the driver based on the running state of the vehicle.

### BRIEF DESCRIPTION OF THE DRAWINGS

The foregoing and other objects, features, aspects and advantages of the present invention will become more apparent from the following detailed description of the example embodiments of the present invention when taken in conjunction with the accompanying drawings.
Fig. 1 is a schematic configuration diagram showing a power train of a vehicle which incorporates a gear shift instruction device according to a first embodiment of the present invention.
Fig. 2 is an outline view of a combination meter according to the first embodiment.
Fig. 3 shows a gear shift diagram based on the relation between the vehicle speed and the accelerator pedal opening degree according to the first embodiment.
Fig. 4 is a flowchart showing a control structure of a program executed by an ECU constituting the gear shift instruction device according to the first embodiment.
Fig. 5 is a first timing chart illustrating an operation of the gear shift instruction device according to the first embodiment.
Fig. 6 shows a gear shift diagram between the third gear and the fourth gear based on the relation between the vehicle speed and the accelerator pedal opening degree according to the first embodiment.
Fig. 7 is a second timing chart illustrating the operation of the gear shift instruction device according to the first embodiment.
Fig. 8 is a flowchart showing a control structure of a program executed by an ECU constituting a gear shift instruction device according to a second embodiment of the present invention.
Fig. 9 is a timing chart illustrating an operation of the gear shift instruction device according to the second embodiment.

### DESCRIPTION OF EMBODIMENTS

Hereinafter, embodiments of the present invention will be described with reference to the drawings. In the following, the same portions have the same reference characters allotted. Their designations and functions are also identical. Therefore, detailed description thereof will not be repeated.

### <First Embodiment>

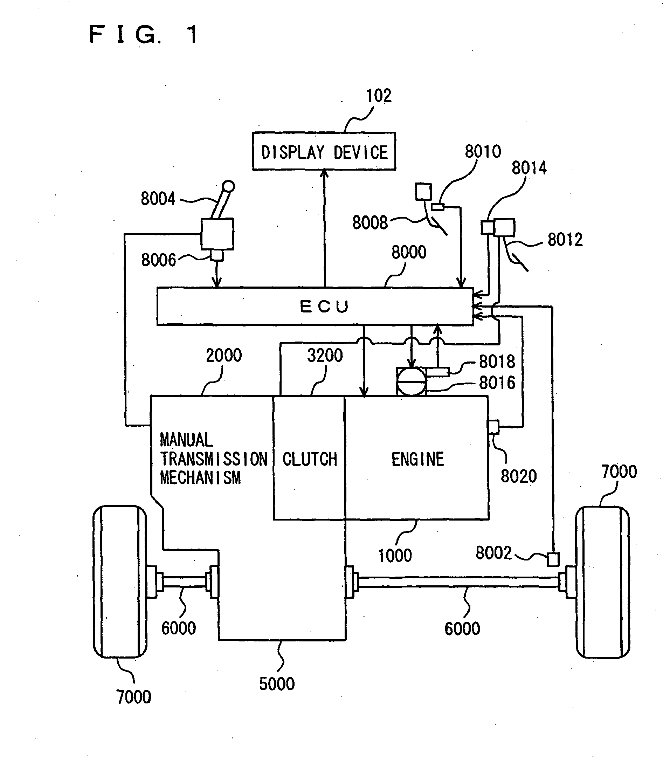

Referring to Fig. 1, a vehicle incorporating a gear shift instruction device according to an embodiment of the present invention will be explained. The vehicle is a FF (Front engine Front drive) vehicle, although it may be a vehicle other than the FF vehicle.

The vehicle is composed of an engine 1000, a manual transmission mechanism 2000, a clutch 3200, a differential gear 5000, a drive shaft 6000, front wheels 7000, and an ECU (Electronic Control Unit) 8000.

Engine 1000 is an internal combustion engine which bums an air-fuel mixture of the air and the fuel injected from an injector (not shown) inside a combustion chamber of a cylinder. With the combustion, a piston inside the cylinder is depressed to thereby rotate a crankshaft.

Manual transmission mechanism 2000 is coupled to engine 1000 via clutch 3200. Manual transmission mechanism 2000 changes the rotation speed of the crankshaft to a desired speed in accordance with a gear selected by the driver by manipulation of a shift lever 8004. Shift lever 8004 and manual transmission mechanism 2000 are connected, e.g., by a control cable such as a push-pull cable. As such, when shift lever 8004 is moved to the position corresponding to the first gear, the gear corresponding to the first gear is established at manual transmission mechanism 2000. The structure of manual transmission mechanism 2000 is well known, and thus, detailed description thereof will not be provided here.

Clutch 3200 is connected to a clutch pedal 8012 via a clutch cylinder (not shown) and a hydraulic circuit. When clutch pedal 8012 is depressed by the driver and an oil pressure in the hydraulic circuit is increased by the clutch cylinder, clutch 3200 operates to interrupt transmission of motive power between engine 1000 and manual transmission mechanism 2000. When the driver releases clutch pedal 8012, clutch 3200 operates to allow transmission of motive power between engine 1000 and manual transmission mechanism 2000. Clutch pedal 8012 is provided with a clutch switch 8014 that transmits an ON signal to ECU 8000 when the depressed amount (stroke) of clutch pedal 8012 becomes a predetermined depressed amount or more.

The output gear of manual transmission mechanism 2000 mates with differential gear 5000. Drive shaft 6000 is connected to differential gear 5000 by spline fitting or the like. The motive power is transmitted to left and right front wheels 7000 via drive shaft 6000.

A vehicle speed sensor 8002, a position switch 8006 of shift lever 8004, an accelerator pedal position sensor 8010 of an accelerator pedal 8008, clutch switch 8014 of clutch pedal 8012, a throttle position sensor 8018 of an electronic throttle valve 8016, and an engine speed sensor 8020 are connected to ECU 8000 via a harness and the like.

Vehicle speed sensor 8002 detects the speed of the vehicle from the rotation speed of drive shaft 6000, and transmits a signal indicating the detected result to ECU 8000. Position switch 8006 detects the position of shift lever 8004, and transmits a signal indicating the detected result to ECU 8000.

Accelerator pedal position sensor 8010 detects the depressed amount of accelerator pedal 8008, i.e., the accelerator pedal opening degree, and transmits a signal indicating the detected result to ECU 8000. The accelerator pedal opening degree corresponds to the degree of the driver's demand for the driving force to the vehicle.

Throttle position sensor 8018 detects the opening degree of electronic throttle valve 8016 that is adjusted by an actuator, and transmits a signal indicating the detected result to ECU 8000. Electronic throttle valve 8016 adjusts the amount of air sucked into engine 1000 (output of engine 1000).

Engine speed sensor 8020 detects the rotation speed of the output shaft (crankshaft) of engine 1000, and transmits a signal indicating the detected result to ECU 8000.

A display device 102 is provided at the driver's seat, and displays to the driver either one of an instruction for gear shift operation to the speed-reducing side (hereinafter, referred to as the "down-shift instruction") and an instruction for gear shift operation to the speed-increasing side (hereinafter, referred to as the "up-shift instruction").

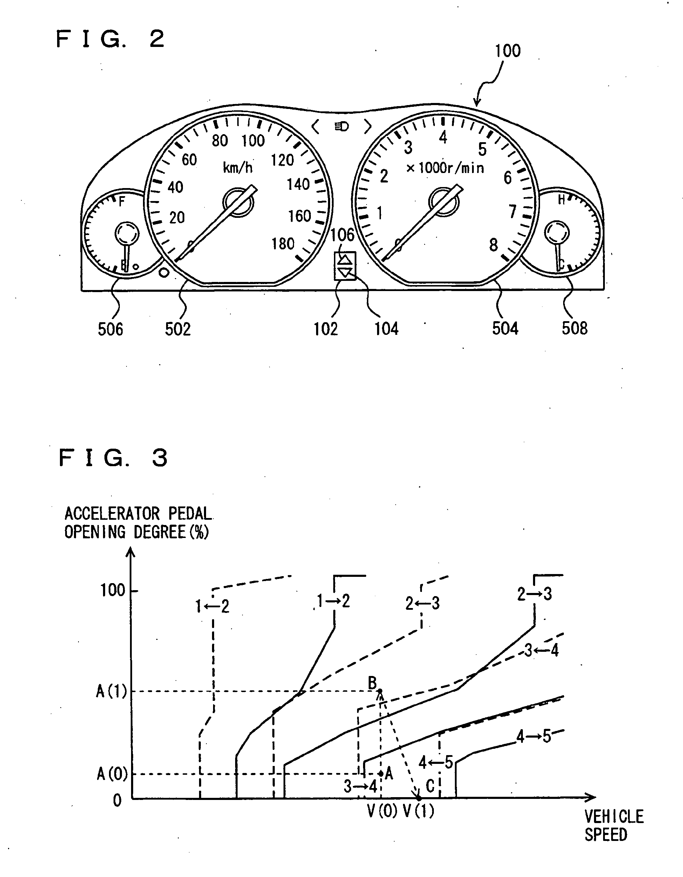

Specifically, as shown in Fig. 2, display device 102 is provided at a combination meter 100 at the driver's seat. Combination meter 100 includes a speedometer 502, a tachometer 504, a fuel gauge 506, a water temperature gauge 508, and display device 102.

Display device 102 has an up-shift instruction lamp 106 of a triangular shape with an apex pointing upward in the paper plane of Fig. 2, and a down-shift instruction lamp 104 of a triangular shape with an apex pointing downward in the paper plane of Fig. 2. In the present embodiment, when up-shift instruction lamp 106 lights up, it means that up shifting is instructed to the driver. When down-shift instruction lamp 104 lights up, it means that down shifting is instructed to the driver. Further, it is configured such that up-shift instruction lamp 106 and down-shift instruction lamp 104 being both off mean an instruction to maintain the current gear.

Although up-shift instruction lamp 106 and down-shift instruction lamp 104 are each turned on by an LED (Light Emitting Diode) for example, lighting is not particularly limited to that by the LED. For example, display device 102 may use a liquid crystal panel such as an LCD (Liquid Crystal Display) instead of up-shift instruction lamp 106 and down-shift instruction lamp 104. That is, display device 102 may be configured to display on a liquid crystal panel a mark of a triangular shape having an apex pointing upward in the paper plane of Fig. 2 at the time of instructing up shifting, and a mark of a triangular shape having an apex pointing downward in the paper plane of Fig. 2 at the time of instructing down shifting.

Further, the shapes of up-shift instruction lamp 106 and down-shift instruction lamp 104 are not limited to the triangular shape. For example, up-shift instruction lamp 106 may have a shape of an arrow pointing upward in the paper plane of Fig. 2, while down-shift instruction lamp 104 may have a shape of an arrow pointing downward in the paper plane of Fig. 2.

Further, display device 102 may be configured to display a gear position currently selected and a gear position corresponding to an instruction for gear shift operation, instead of the display corresponding to the up-shift instruction and the down-shift instruction. Alternatively, it may be configured to display only the gear position corresponding to the instruction for gear shift operation. That is, when the gear corresponding to the instruction for gear shift operation is smaller than the currently selected gear, the driver can determine that down shifting is being instructed. If the gear corresponding to the instruction for gear shift operation is greater than the currently selected gear, the driver can determine that up shifting is being instructed.

In receipt of a signal corresponding to the up-shift instruction or the down-shift instruction from ECU 8000, display device 102 displays either the up-shift instruction or the down-shift instruction in accordance with the received signal. That is, display device 102 turns on up-shift instruction lamp 106 in receipt of the signal corresponding to the up-shift instruction from ECU 8000. In receipt of the signal corresponding to the down-shift instruction from ECU 8000, display device 102 turns on down-shift instruction lamp 104.

ECU 8000 controls various parts and devices so that the vehicle attains a desired running state, based on the signals transmitted from vehicle speed sensor 8002, position switch 8006, accelerator pedal position sensor 8010, clutch switch 8014, throttle position sensor 8018, engine speed sensor 8020 and the like, as well as maps and programs stored in a ROM (Read Only Memory). Further, ECU 8000 transmits to display device 102 a signal corresponding to the up-shift instruction or the down-shift instruction in accordance with the vehicle running state. It is noted that vehicle speed sensor 8002, accelerator pedal position sensor 8010, clutch switch 8014, engine speed sensor 8020, ECU 8000, and display device 102 constitute the gear shift instruction device of the present embodiment.

ECU 8000 transmits to display device 102 a signal corresponding to either one of the up-shift instruction and the down-shift instruction based on the currently selected gear, the vehicle speed, and the accelerator pedal opening degree. A memory in ECU 8000 prestores therein a gear shift diagram, as shown in Fig. 3, which includes a gear shift line to the speed-reducing side (down-shift line) (broken line) and a gear shift line to the speed-increasing side (up-shift line) (solid line) defined in advance in association with the vehicle speed and the accelerator pedal opening degree. In Fig. 3, the horizontal axis represents the vehicle speed, and the vertical axis represents the accelerator pedal opening degree. The gear shift diagram shown in Fig. 3 is similar to the one used in an automatic transmission mechanism at the time of forward running.

The down-shift line shown by a broken line in Fig. 3 defines the timing of gear shifting to the speed-reducing side. That is, with the down-shift line as a boundary, when the position specified on Fig. 3 based on the detected accelerator pedal opening degree and vehicle speed moves from the region on the right side of the down-shift line to the region on the left side thereof, ECU 8000 determines whether gear shifting to the speed-reducing side is necessary or not based on the currently selected gear. When ECU 8000 determines that the gear shifting to the speed-reducing side is necessary, it transmits a signal corresponding to the down-shift instruction to display device 102. In receipt of the signal corresponding to the down-shift instruction, display device 102 turns on down-shift instruction lamp 104. The down-shift line is defined for each pair of consecutive gears. When the position specified on Fig. 3 based on the detected accelerator pedal opening degree and vehicle speed crosses the down-shift line of "1 ← 2" shown in Fig. 3, for example, ECU 8000 determines that the gear shifting from the second gear to the first gear is necessary. Similarly, when crossing the down-shift lines of "2 ← 3", "3 ← 4" and "4 ← 5", ECU 8000 determines that gear shifting from the third gear to the second gear, gear shifting from the fourth gear to the third gear, and gear shifting from the fifth gear to the fourth gear, respectively, are necessary.

The up-shift line shown by a solid line in Fig. 3 defines the timing of gear shifting to the speed-increasing side. That is, with the up-shift line as a boundary, when the position specified on Fig. 3 based on the detected accelerator pedal opening degree and vehicle speed moves from the region on the left side of the up-shift line to the region on the right side thereof, ECU 8000 determines whether gear shifting to the speed-increasing side is necessary or not based on the currently selected gear. When ECU 8000 determines that the gear shifting to the speed-increasing side is necessary, it transmits a signal corresponding to the up-shift instruction to display device 102. In receipt of the signal corresponding to the up-shift instruction, display device 102 turns on up-shift instruction lamp 106. The up-shift line is defined for each pair of consecutive gears. When the position specified on Fig. 3 based on the detected accelerator pedal opening degree and vehicle speed crosses the up-shift line of "1 → 2" shown in Fig. 3, for example, ECU 8000 determines that the gear shifting from the first gear to the second gear is necessary. Similarly, when crossing the up-shift lines of "2 → 3", "3 → 4" and "4 → 5", ECU 8000 determines that gear shifting from the second gear to the third gear, gear shifting from the third gear to the fourth gear, and gear shifting from the fourth gear to the fifth gear, respectively, are necessary.

In the gear shift instruction device having the configuration as described above, assume the case where the driver depresses accelerator pedal 8008 for acceleration at the time when the vehicle speed is V (0) and the accelerator pedal opening degree is A (0) (point A shown in Fig. 3), for example. When the accelerator pedal opening degree changes from A (0) to A (1) as the driver depresses accelerator pedal 8008, the position specified based on the vehicle speed and the accelerator pedal opening degree moves from point A to point B. At this time, with the down-shift line of "3 ← 4" as a boundary, it moves from point A in the right-side region to point B in the left-side region, and accordingly, ECU 8000 determines that gear shifting from the fourth gear to the third gear is necessary. Thus, when the current gear is the fourth gear, ECU 8000 transmits a signal corresponding to the down-shift instruction to display device 102. Display device 102 then turns on down-shift instruction lamp 104.

To change manual transmission mechanism 2000 from the fourth gear to the third gear in accordance with lighting of down-shift instruction lamp 104, the driver reduces the depressed amount of accelerator pedal 8008. For example, when the driver reduces the depressed amount of accelerator pedal 8008 to achieve the accelerator pedal opening degree of approximately zero, the position on Fig. 3 specified based on the vehicle speed and the accelerator pedal opening degree moves from point B to point C. At this time, with the up-shift line of "3 → 4" as a boundary, it moves from point B in the left-side region to point C in the right-side region, so that ECU 8000 determines that gear shifting from the third gear to the fourth gear is necessary. Thus, ECU 8000 transmits a signal corresponding to the up-shift instruction to display device 102, and display device 102 turns on up-shift instruction lamp 106.

As described above, there is a case where up-shift instruction lamp 106 is turned on immediately after down shifting, as the driver releases accelerator pedal 8008 upon gear shifting, despite the fact that the driver has performed a down-shift operation in an attempt to accelerate the vehicle. This may cause uncomfortable feeling of the driver about the instruction for gear shift operation.

In view of the foregoing, the present invention is characterized in that an instruction for gear shift operation to the speed-increasing side is prohibited from the timing at which ECU 8000 detected gear shifting to the speed-reducing side, until a predetermined time passes therefrom.

Specifically, when down shifting of the gear is detected, ECU 8000 prohibits lighting of up-shift instruction lamp 106, and activates a timer. After a predetermined time has passed from activation of the timer, ECU 8000 permits lighting of up-shift instruction lamp 106.

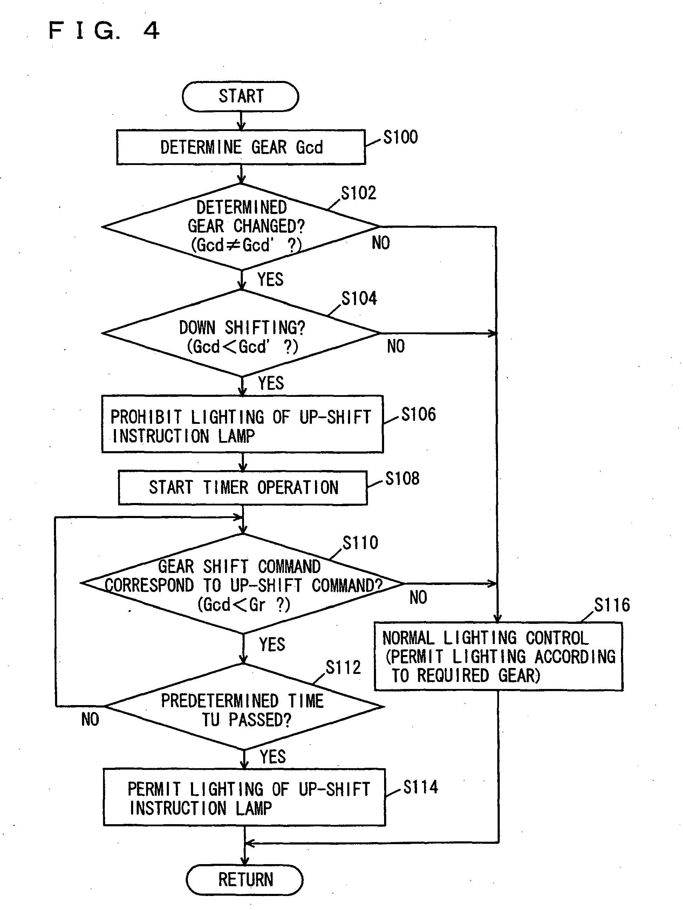

Hereinafter, a control structure of a program that is executed by ECU 8000 constituting the gear shift instruction device according to the present embodiment will be described with reference to Fig. 4.

In step (hereinafter, abbreviated as "S") 100, ECU 8000 determines a gear Gcd. ECU 8000 determines gear Gcd based on a ratio between the vehicle speed detected by vehicle speed sensor 8002 and the engine speed detected by engine speed sensor 8020 at the time when clutch switch 8014 is off (i.e., when clutch 3200 is in the motive power transmitting state), for example. It is noted that the way of determining gear Gcd is not particularly limited to the way based on the vehicle speed and the engine speed. For example, ECU 8000 may be configured to determine gear Gcd based on the gear corresponding to the position of shift lever 8004 detected by position sensor 8006 at the time when clutch switch 8014 is off.

Further, in the present embodiment, ECU 8000 determines that gear Gcd is the first gear when the vehicle speed detected by vehicle speed sensor 8002 is approximately zero. Further, in the present embodiment, when clutch switch 8014 is on (i.e., when clutch 3200 is in the state interrupting transmission of the motive power), ECU 8000 determines a gear Gcd' determined in a previous calculation cycle to be the gear Gcd determined in the current calculation cycle.

In S 102, ECU 8000 determines whether gear Gcd has changed. Specifically, ECU 8000 determines whether gear Gcd is different from gear Gcd' determined in the previous calculation cycle. If gear Gcd has changed (YES in S102), the process proceeds to S 104. If not (NO in S 102), the process proceeds to S 116.

In S 104, ECU 8000 determines whether there occurred down shifting by the driver's gear shift operation. Specifically, ECU 8000 determines that down shifting has occurred when gear Gcd is smaller than gear Gcd' determined in the previous calculation cycle. If there occurred down shifting by the driver's gear shift operation (YES in S 104), the process proceeds to S 106. If not (NO in S 104), the process proceeds to S116.

In S106, ECU 8000 prohibits lighting of up-shift instruction lamp 106. In S 108, ECU 8000 starts an operation of the timer. That is, ECU 8000 resets the count value of the timer to the initial value (e.g., zero), and starts addition of a predetermined count value to the initial value.

In S 110, ECU 8000 determines whether a gear shift command based on the gear shift diagram shown in Fig. 3 corresponds to an up-shift command. That is, ECU 8000 determines a gear (required gear Gr) corresponding to the running state, based on the vehicle speed detected by vehicle speed sensor 8002, the accelerator pedal opening degree detected by accelerator pedal position sensor 8010, and the gear shift diagram shown in Fig. 3. ECU 8000 determines that the gear shift command corresponds to the up-shift command when gear Gcd is smaller than required gear Gr. If the gear shift command corresponds to the up-shift command (YES in S 110), the process proceeds to S 112. If not (NO in S 110), the process proceeds to S 116.

In S 112, ECU 8000 determines whether a predetermined time TU has passed since the activation of the timer. That is, ECU 8000 determines whether the count value counted from the initial value is equal to or greater than a value Ca corresponding to predetermined time TU. It is noted that the "predetermined time TU" is a time adapted by an experiment and the like, which is not particularly limited. If predetermined time TU has passed (YES in S112), the process proceeds to S114. If not (NO in S 112), the process returns to S110.

In S 114, ECU 8000 permits lighting of up-shift instruction lamp 106. That is, if the gear shift command based on the gear shift diagram shown in Fig. 3 corresponds to the up-shift command, ECU 8000 transmits a signal corresponding to the up-shift instruction to display device 102. Display device 102 turns on up-shift instruction lamp 106 in response to reception of the signal corresponding to the up-shift instruction from ECU 8000.

In S 116, ECU 8000 performs normal lighting control. That is, if the gear shift command based on Fig. 3 corresponds to the up-shift command, ECU 8000 transmits a signal corresponding to the up-shift instruction to display device 102. Meanwhile, ECU 8000 determines that the gear shift command corresponds to the down-shift command when gear Gcd determined is greater than required gear Gr. In this case, ECU 8000 transmits a signal corresponding to the down-shift instruction to display device 102. Further, when gear Gcd is identical to required gear Gr, ECU 8000 does not transmit any signal to display device 102. At this time, display device 102 turns off both up-shift instruction lamp 106 and down-shift instruction lamp 104. It is noted that ECU 8000 may be configured to permit up-shift instruction and down-shift instruction, when there occurred a change of determined gear Gcd, after a lapse of a predetermined time TN from the time when determination is made that gear Gcd has changed. Predetermined time TN is not particularly limited, as long as it is shorter than predetermined time TU set for the timer.

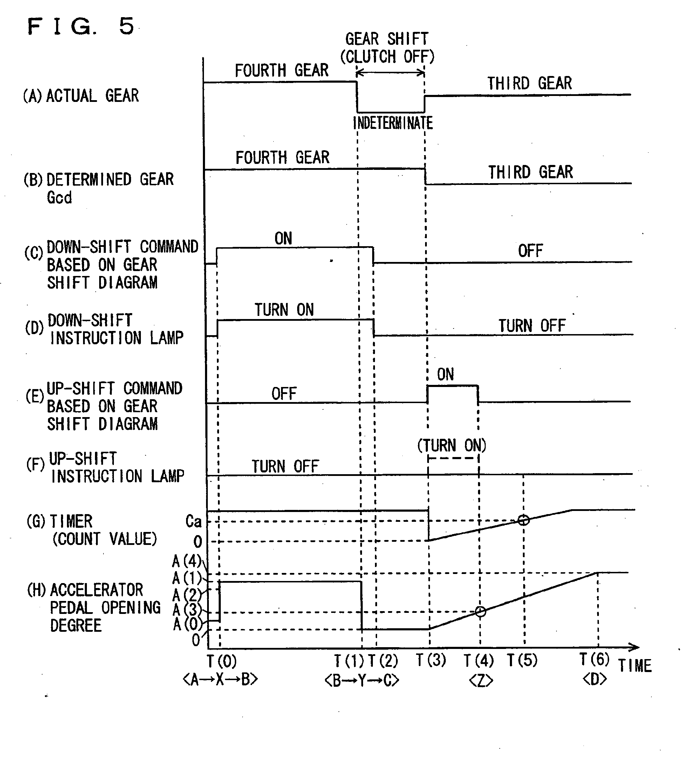

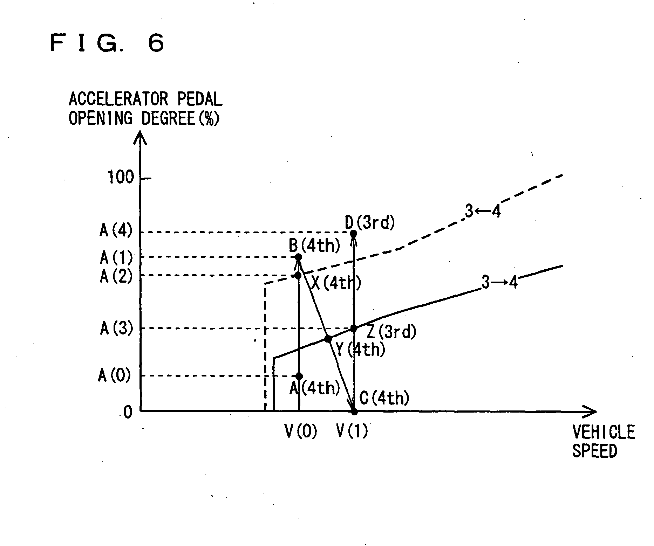

An operation of the gear shift instruction device according to the present embodiment based on the above-described structure and flowchart will now be described with reference to Figs. 5 and 6. In Fig. 5, (A) shows a change of an actual gear established in manual transmission mechanism 2000 when clutch 3200 is in the motive power transmitting state. In Fig. 5, (B) shows a change of a gear (gear Gcd) determined in ECU 8000. Fig. 6 shows a gear shift diagram including an up-shift line from the third gear to the fourth gear (solid line) and a down-shift line from the fourth gear to the third gear (broken line).

For example, when shift lever 8004 is moved to the position corresponding to the fourth gear and clutch pedal 8012 is not depressed, the fourth gear is established in manual transmission mechanism 2000, as shown in (A) in Fig. 5. At this time, gear Gcd is determined to be the fourth gear, as shown in (B) in Fig. 5, based on the ratio between the vehicle speed and the engine speed (S100).

At time T (0), when the driver increases the accelerator pedal opening degree from A (0) to A (1), the position specified by the vehicle speed V (0) and the accelerator pedal opening degree moves from point A, shown in the gear shift diagram of Fig. 6, to reach point B, by crossing the down-shift line of "3 ← 4" (broken line) at point X. At this time, the fourth gear is maintained (NO in S 102), and thus, normal lighting control is carried out during this time (S 116).

That is, when required gear Gr, which is obtained based on the vehicle speed detected by vehicle speed sensor 8002, the accelerator pedal opening degree detected by accelerator pedal position sensor 8010 and the gear shift diagram shown in Fig. 6, is smaller than the gear (fourth gear) determined from the vehicle speed and the engine speed, ECU 8000 determines that the gear shift command corresponds to the down-shift command. Thus, the down-shift command is turned on, as shown in (C) in Fig. 5, while the up-shift command remains off, as shown in (E) in Fig. 5. At this time, ECU 8000 transmits a signal corresponding to the down-shift instruction to display device 102. In response, down-shift instruction lamp 104 is turned on at time T (0), as shown in (D) in Fig. 5.

At time T (1), when the driver depresses clutch pedal 8012 to cause clutch 3200 to interrupt transmission of the motive power, as shown in (A) in Fig. 5, and releases accelerator pedal 8008, as shown in (H) in Fig. 5, the accelerator pedal opening degree changes from A (1) to approximately zero.

At time T (2), when required gear Gr based on the gear shift diagram shown in Fig. 6 becomes the fourth gear in response to the accelerator pedal opening degree becoming approximately zero, the down-shift instruction is turned off (S116), since gear Gcd is the fourth gear (NO in S 102). That is, ECU 8000 does not transmit the signal corresponding to the down-shift instruction to display device 102. As such, down-shift instruction lamp 104 is turned off.

Further, during the time period from time T (1) to time T (3), clutch switch 8014 is on, and the motive power transmitting state of clutch 3200 changes. As such, the actual gear established in manual transmission mechanism 2000 becomes indeterminate, as shown in (A) in Fig. 5. Since clutch switch 8014 is on, ECU 8000 sets gear Gcd' (fourth gear) determined immediately before time T (1) as the currently determined gear Gcd. Thus, the determined gear remains the fourth gear.

At time T (3), when the driver releases clutch pedal 8012 after moving shift lever 8004 to a position corresponding to the third gear, clutch 3200 attains the motive power transmitting state, and the actual gear established in manual transmission mechanism 2000 becomes the third gear, as shown in (A) in Fig. 5. At this time, when clutch switch 8014 is turned off, gear Gcd is determined to be the third gear, based on the ratio between the vehicle speed and the engine speed (S100).

Since gear Gcd' determined in the previous calculation cycle is the fourth gear and gear Gcd determined in the current calculation cycle is the third gear, ECU 8000 determines that determined gear Gcd has changed (YES in S102).

Further, since gear Gcd is smaller than gear Gcd' in the previous calculation cycle, ECU 8000 determines that down shifting has occurred (YES in S 104). At this time, lighting of up-shift instruction lamp 106 is prohibited (S106), and the operation of the timer is started (S 108), as shown in (G) in Fig. 5. ECU 8000 adds a predetermined count value after resetting it to the initial value of zero.

When required gear Gr (fourth gear) based on the vehicle speed detected by vehicle speed sensor 8002, the accelerator pedal opening degree detected by accelerator pedal position sensor 8010 and the gear shift diagram shown in Fig. 6 is greater than the gear (third gear) determined based on the ratio between the vehicle speed and the engine speed, ECU 8000 determines that the gear shift command corresponds to the up-shift command (YES in S110). Thus, the up-shift command based on the gear shift diagram is turned on, as shown in (E) in Fig. 5. However, lighting of up-shift instruction lamp 106 is not permitted until time T (5) at which predetermined time TU will have passed from time T (3) (i.e., the count value will reach a predetermined value Ca) (NO in S112).

At time T (5), when predetermined time TU has passed from time T (3) (YES in S 112), lighting of up-shift instruction lamp 106 is permitted (S114). Thus, up-shift instruction lamp 106 is turned on when the up-shift command is turned on based on the gear shift diagram shown in Fig. 6.

If lighting of up-shift instruction lamp 106 is not prohibited until predetermined time TU passes after determination is made that the determined gear corresponds to the third gear, up-shift instruction lamp 106 will be turned on immediately after time T (3), as shown by the broken line in (F) in Fig. 5. In contrast, lighting of up-shift instruction lamp 106 is suppressed until a predetermined time has elapsed, as described above.

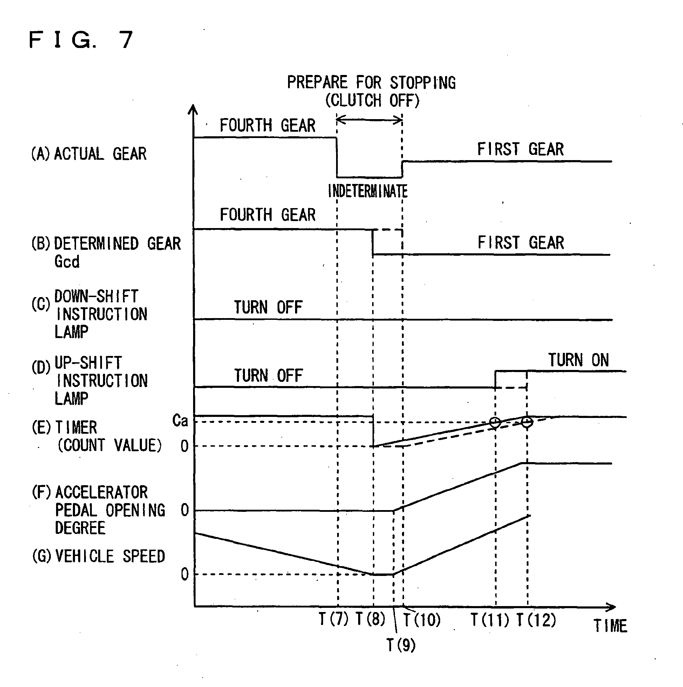

Hereinafter, an operation of the gear shift instruction device in the case where the vehicle is decelerated and completely stopped and then started again will be explained with reference to Fig. 7. Fig. 7 shows in (A) a change of the actual gear established in manual transmission mechanism 2000 when clutch 3200 is in the motive power transmitting state, and shows in (B) a change of the gear determined in ECU 8000.

For example, when shift lever 8004 is moved to a position corresponding to the fourth gear and clutch pedal 8012 is not depressed, the fourth gear is established in manual transmission mechanism 2000, as shown in (A) in Fig. 7. At this time, gear Gcd is determined to be the fourth gear, based on the ratio between the vehicle speed and the engine speed, as shown in (B) in Fig. 7 (S100).

When the fourth gear is maintained until time T (7) (NO in S102), normal lighting control is carried out during the time (S 116).

That is, if required gear Gr, obtained based on the vehicle speed detected by vehicle speed sensor 8002, the accelerator pedal opening degree detected by accelerator pedal position sensor 8010 and the gear shift diagram shown in Fig. 3, is identical to the gear (fourth gear) determined from the vehicle speed and the engine speed, neither the down-shift command nor the up-shift command is turned on. Thus, down-shift instruction lamp 104 is off, as shown in (C) in Fig. 7, and up-shift instruction lamp 106 is off, as shown in (D) in Fig. 7.

Further, the vehicle speed is reduced at a constant change rate as the driver operates the brake pedal (not shown) or the like, as shown in (G) in Fig. 7. Furthermore, as the driver operates the brake pedal, the accelerator pedal opening degree is approximately zero, as shown in (F) in Fig. 7.

At time T (7), when the driver depresses clutch pedal 8012 for preparation of stopping, clutch 3200 attains the motive power transmission interrupting state, as shown in (A) in Fig. 7. At this time, clutch switch 8014 is turned on, and thus, the motive power transmitting state of clutch 3200 changes. Accordingly, the gear established in manual transmission mechanism 2000 becomes indeterminate, as shown in (A) in Fig. 7.

Since clutch switch 8014 is on, ECU 8000 sets gear Gcd' (fourth gear) determined immediately before time T (7) to be gear Gcd. Thus, the determined gear remains the fourth gear.

At time T (8), the vehicle speed detected by vehicle speed sensor 8002 becomes approximately zero, as shown in (G) in Fig. 7. As such, gear Gcd is determined to be the first gear, as shown in (B) in Fig. 7 (S100).

At this time, when gear Gcd' determined in the previous calculation cycle is the fourth gear and gear Gcd determined in the current calculation cycle is the first gear, ECU 8000 determines that the determined gear has changed (YES in S 102). Further, since gear Gcd is smaller than the previously determined gear Gcd', ECU 8000 determines that down shifting has occurred (YES in S104). At this time, lighting of up-shift instruction lamp 106 is prohibited (S106), and the operation of the timer is started as shown in (E) in Fig. 7 (S108). ECU 8000 starts addition of a predetermined count value after resetting it to the initial value of zero.

At time T (9), the driver moves shift lever 8004 to a position corresponding to the first gear and then presses down accelerator pedal 8008 while reducing the depressed amount of clutch pedal 8012. In response, clutch 3200 starts transmission of the motive power, so that the vehicle speed starts increasing, as shown in (G) in Fig. 7.

At time T (10), clutch pedal 8012 is released and clutch switch 8014 is turned off. Thus, the actual gear established in manual transmission mechanism 2000 becomes the first gear, as shown in (A) in Fig. 7. Gear Gcd remains the first gear at and after time T (8), as shown in (B) in Fig. 7.

At time T (11), when predetermined time TU has passed (i.e., the count value becomes predetermined value Ca or greater) (YES in S112), lighting of the up-shift lamp is permitted (S114). At this time, when required gear Gr based on the vehicle speed detected by vehicle speed sensor 8002, the accelerator pedal opening degree detected by accelerator pedal position sensor 8010 and the gear shift diagram shown in Fig. 3 becomes the second gear or greater (NO in S102, S 116), then the up-shift instruction lamp is turned on, as shown in (D) in Fig. 7.

As such, time T (11) at which the up-shift instruction is permitted in the case where the timer is activated at the time point when the vehicle speed becomes approximately zero is earlier in timing than time T (12) (broken line in (D) in Fig. 7) at which the up-shift instruction is permitted in the case where the timer is activated at the time point when the actual gear becomes the first gear (broken line in (E) in Fig. 7). This can prevent a delay in lighting of up-shift instruction lamp 106 in the case where the vehicle is started immediately after it is stopped.

As described above, according to the gear shift instruction device of the present embodiment, even if the vehicle enters the state where the up-shift instruction can be turned on after down shifting because the accelerator pedal position becomes the fully closed state, the up-shift instruction is prohibited until predetermined time TU has passed. That is, the up-shift instruction lamp would not be turned on immediately following the event that the driver intentionally down shifts the transmission mechanism. This prevents the driver from feeling uncomfortable about the instruction for gear shift operation. The up-shift instruction is permitted after a lapse of predetermined time TU, and thus, an appropriate instruction for gear shift operation can be given to the driver in accordance with the vehicle state when the accelerator pedal opening degree after gear shifting becomes approximately equal to that before gear shifting. Accordingly, it is possible to provide a gear shift instruction device that suppresses an instruction for gear shift operation contrary to the driver's intention.

Although the case of applying the gear shift instruction device to the vehicle incorporating manual transmission mechanism 2000 has been explained in the present embodiment, it may also be applied to a vehicle incorporating an automatic transmission mechanism having a manual shift mode in which the driver can select an arbitrary gear in accordance with the driver's operation.

In the case where it is applied to the vehicle incorporating the automatic transmission mechanism having the manual shift mode, it is desirable that the ECU permits lighting of the up-shift instruction lamp when the accelerator pedal opening degree is smaller than a predetermined opening degree before predetermined time TU passes from the timing of detection of down shifting. In the automatic transmission mechanism having the manual shift mode, the operation to return the accelerator pedal opening degree is unnecessary, unlike the case of the manual transmission mechanism. As such, when the degree of the driver's demand for the driving force is smaller than a predetermined degree, it can be determined that the driver does not intend to accelerate the vehicle. Thus, in this case, lighting of the up-shift instruction lamp is permitted so that an appropriate shift instruction is provided to the driver based on the running state of the vehicle.

### <Modification of First Embodiment>

Hereinafter, a gear shift instruction device according to a modification of the first embodiment of the present invention will be described. In the present modification, the way of detecting the down shifting of the gear is different. Specifically, in the flowchart shown in Fig. 4 explained above in conjunction with the first embodiment, the determination in S 104 as to whether down shifting has occurred or not is made by determination as to whether the up-shift line in the gear shift diagram in Fig. 6 has been crossed to reach the up-shift side or not (i.e., whether point Y is passed or not in Fig. 6). The other configuration is identical to that of the first embodiment above, and thus, detailed description thereof will not be repeated here.

By setting the time point to start the operation of the timer to the time point at which the up-shift line is crossed to the up-shift side, which is defined as the earliest timing, and by prohibiting the up-shift instruction until the predetermined time passes from the crossing of the up-shift line to the up-shift side, the operation of the timer can be started earlier, in addition to the effects obtained in the first embodiment described above. As such, it is possible to suppress lighting of the up-shift instruction lamp during the time period from when the driver starts the down-shifting operation until when he/she completes the gear shift operation and returns the accelerator pedal to the position before the gear shifting. Preferably, the predetermined time set for the timer in the present modification is adapted by an experiment and the like, and it desirably corresponds to predetermined time TU of the first embodiment to which the time for gear shift operation is added. With this configuration, it is possible to lift the prohibition of lighting of the up-shift instruction lamp approximately at the same time point as in the first embodiment.

### <Second Embodiment>

Hereinafter, a gear shift instruction device according to a second embodiment of the present invention will be described. A vehicle incorporating the gear shift instruction device of the present embodiment differs in a control structure of a program executed by ECU 8000 compared to the configuration of the vehicle incorporating the gear shift instruction device of the first embodiment described above. The other configuration is identical to that of the vehicle incorporating the gear shift instruction device of the first embodiment, and they are denoted by the same reference characters and their functions are identical as well. Thus, detailed description thereof will not be repeated here.

The present embodiment is characterized in that ECU 8000 permits up-shift instruction when an absolute value of the difference between the accelerator pedal opening degree after gear shifting and that before gear shifting becomes a predetermined opening degree or less before a predetermined time passes from when the timer is activated at the timing of detection of a change of determined gear Gcd.

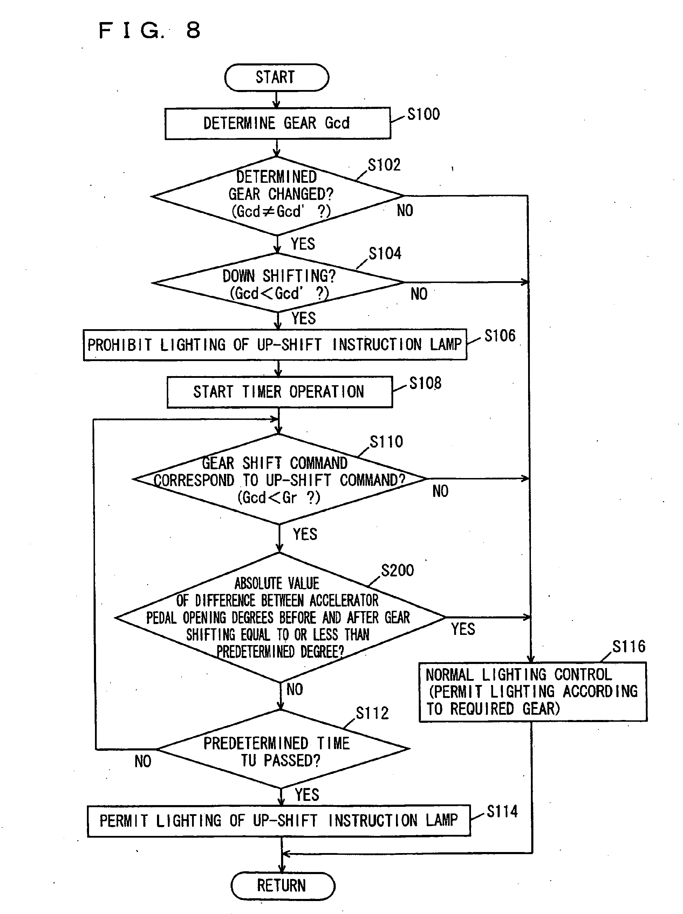

Hereinafter, a control structure of the program executed by ECU 8000 constituting the gear shift instruction device of the present embodiment will be described with reference to Fig. 8.

In the flowchart shown in Fig. 8, the same processing as in the flowchart shown in Fig. 4 has the same step number allotted, and their processing is identical. Thus, detailed description thereof will not be repeated here.

When the gear shift command corresponds to the up-shift command (YES in S 110), ECU 8000 determines in S200 whether an absolute value of the difference between the accelerator pedal opening degree detected by accelerator pedal position sensor 8010 and the accelerator pedal opening degree before gear shifting is equal to or less than a predetermined opening degree. It is noted that the "predetermined opening degree" is the opening degree adapted through an experiment and the like, which is not particularly restricted. The predetermined opening degree may be zero.

Further, the "accelerator pedal opening degree before gear shifting" refers to the accelerator pedal opening degree detected immediately before turning on of clutch switch 8014. For example, when clutch switch 8014 is turned on, ECU 8000 stores the accelerator pedal opening degree detected by accelerator pedal position sensor 8010 in a memory. Alternatively, ECU 8000 may be configured to constantly store the changes of the accelerator pedal opening degrees and, upon turning on of clutch switch 8014, calculate and store in the memory the average value of the accelerator pedal opening degrees during a predetermined period of time before turning on of the switch. If the absolute value of the difference between the detected accelerator pedal opening degree and the accelerator pedal opening degree before gear shifting is equal to or smaller than the predetermined value (YES in S200), the process proceeds to S116. If not (NO in S200), the process proceeds to S 112.

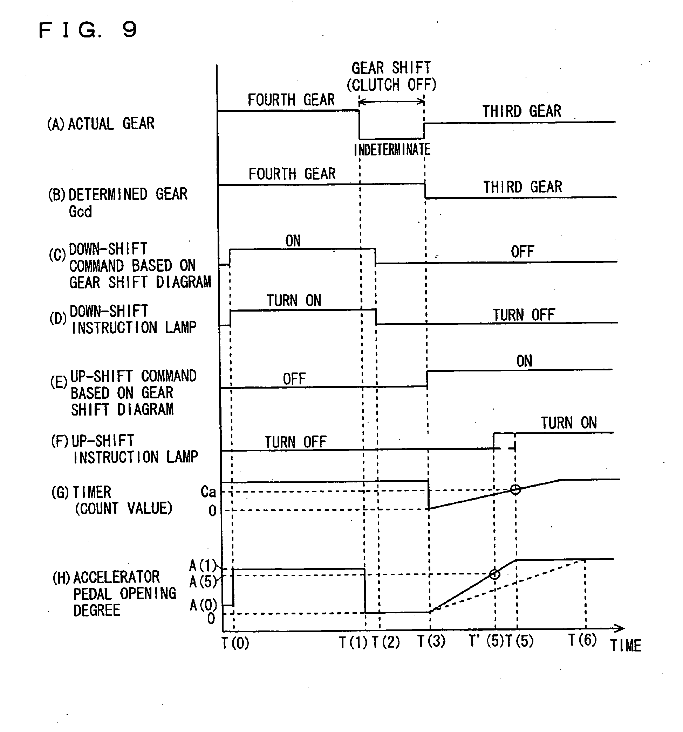

An operation of the gear shift instruction device according to the present embodiment based on the above-described structure and flowchart will now be described with reference to Fig. 9. It is noted that the operation of ECU 8000 up to time T (2) is identical to that of the gear shift instruction device up to time T (2) in Fig. 5 explained in the first embodiment. Thus, detailed description thereof will not be repeated here.

At time T' (5) prior to time T (5) at which predetermined time TU passes from time T (3), when the accelerator pedal opening degree becomes not less than the accelerator pedal opening degree A (5), as shown by the broken line in (H) in Fig. 9, with which the absolute value of the difference between the relevant accelerator pedal opening degree and the accelerator pedal opening degree A (5) before gear shifting becomes the predetermined opening degree or less (YES in S200), then normal lighting control is carried out (S 116).

That is, down-shift instruction lamp 104 is turned on if required gear Gr is smaller than the gear detected by position sensor 8006, while up-shift instruction lamp 106 is turned on if required gear Gr is greater than the detected gear.

For example, for the sake of convenience of explanation, assume that the up-shift instruction based on the gear shift diagram is on at and after time T (3), as shown in (E) in Fig. 9. Even in such a case, up-shift instruction lamp 106 is turned on at time T' (5) that is prior to time T (5) at which predetermined time TU passes from detection of the change of the determined gear to the third gear.

As described above, according to the gear shift instruction device of the present embodiment, in addition to the effects in the first embodiment described above, it is possible to restrict a delay in lighting of the up-shift instruction lamp by permitting the up-shift instruction when the absolute value of the difference between the accelerator pedal opening degree after gear shifting and that before gear shifting becomes not greater than a predetermined opening degree before predetermined time TU passes from the timing of detection of the gear shifting to the speed-reducing side. This ensures that an appropriate instruction for gear shift operation is given to the driver in accordance with the vehicle state.

Further, in the case where the accelerator pedal opening degree after gear shifting becomes greater than that before gear shifting and thus the absolute value of the difference between the accelerator pedal opening degrees before and after the gear shifting becomes greater than a predetermined opening degree before a lapse of predetermined time TU, it can be determined that the driver is demanding acceleration of the vehicle. At this time, lighting of the up-shift instruction lamp is prohibited, and accordingly, an instruction for gear shift operation contrary to the driver's intention can be suppressed.

It may be possible to prohibit the up-shift instruction by adding a condition of change rate of the accelerator pedal opening degree (i.e., the speed of operation of the accelerator pedal), in addition to the condition of the accelerator pedal opening degree. For example, it may be configured to prohibit lighting of the up-shift instruction lamp, even if the absolute value of the difference between the accelerator pedal opening degrees before and after gear shifting is not greater than a predetermined opening degree, if the change rate of the accelerator pedal opening degree is equal to or greater than a predetermined change rate. When the change rate of the accelerator pedal opening degree is not less than a predetermined change rate, it can be determined that the driver is demanding acceleration of the vehicle, and thus, lighting of the up-shift instruction lamp is prohibited. Accordingly, it is possible to suppress an instruction for a gear shift operation contrary to the driver's intention.

Although the present invention has been described and illustrated in detail, it is clearly understood that the same is by way of illustration and example only and is not to be taken by way of limitation.

## Claims

1. A gear shift instruction device, instructing to a driver a gear shift operation for a transmission mechanism (2000) mounted on a vehicle and allowing gear shifting during a forward running in accordance with an operation of the driver, said transmission mechanism (2000) being one of a manual transmission mechanism and an automatic transmission mechanism having a manual shift mode, the gear shift instruction device comprising:
instruction means (102) for instructing a gear shift operation of said transmission mechanism (2000) to said driver; and
control means (8000) for generating a gear shift command signal corresponding to a state of said vehicle using a gear shift diagram and for controlling said instruction means (102) to instruct a gear shift operation to one of a speed-increasing side and a speed-reducing side of said transmission mechanism (2000) based on said generated gear shift command signal,
said control means (8000) including means for determining presence or absence of gear shifting to the speed-reducing side and **characterized in that** the control means (8000) further including means for prohibiting said instruction of the gear shift operation to the speed-increasing side, from a timing at which it is determined that the gear has been shifted to the speed-reducing side, until a predetermined time passes therefrom.

2. The gear shift instruction device according to claim 1, further comprising gear shift detection means (8002, 8020) for detecting a gear shift state in said transmission mechanism (2000), wherein
said control means (8000) includes means for prohibiting said instruction of the gear shift operation to the speed-increasing side, from the timing at which it is determined that the gear has been shifted to the speed-reducing side based on a detected result of said gear shift detection means (8002, 8020), until the predetermined time passes therefrom.

3. The gear shift instruction device according to claim 1 or 2, further comprising detection means (8010) for detecting a degree of demand for a driving force to said vehicle by said driver, wherein
said control means (8000) includes means for permitting said instruction of the gear shift operation to the speed-increasing side when an absolute value of a difference between the degree of demand detected by said detection means (8010) and the degree of demand before the gear shifting becomes not greater than a predetermined degree before said predetermined time passes from the timing at which it is determined that the gear has been shifted to the speed-reducing side based on the detected result of said gear shift detection means (8002, 8020).

4. The gear shift instruction device according to claim 3, wherein said control means (8000) includes means for prohibiting said instruction of the gear shift operation to the speed-increasing side when a change rate of the degree of demand detected by said detection means (8010) becomes not less than a predetermined change rate before said predetermined time passes from the timing at which it is determined that the gear has been shifted to the speed-reducing side based on the detected result of said gear shift detection means (8002, 8020), even if the absolute value of the difference between the degree of demand detected by said detection means (8010) and the degree of demand before said gear shifting is not greater than the predetermined degree.

5. The gear shift instruction device according to claim 1 or 2, wherein said transmission mechanism (2000) is the automatic transmission mechanism having the manual shift mode,
said gear shift instruction device further comprising detection means (8010) for detecting a degree of demand for a driving force to said vehicle by said driver, wherein
said control means (8000) includes means for permitting said instruction of the gear shift operation to the speed-increasing side when the degree of demand detected by said detection means (8010) is smaller than a predetermined degree before said predetermined time passes from the timing at which it is determined that the gear has been shifted to the speed-reducing side based on the detected result of said gear shift detection means (8002, 8020).

6. A gear shift instruction method for instructing to a driver, using a display device, a gear shift operation for a transmission mechanism (2000) mounted on a vehicle and allowing gear shifting during a forward running in accordance with an operation of the driver, said transmission mechanism (2000) being one of a manual transmission mechanism and an automatic transmission mechanism having a manual shift mode, the gear shift instruction method comprising the steps of:
instructing a gear shift operation of said transmission mechanism (2000) to said driver;
generating a gear shift command signal corresponding to a state of said vehicle using a gear shift diagram, and controlling said display device to instruct a gear shift operation to one of a speed-increasing side and a speed-reducing side of said transmission mechanism (2000) based on said generated gear shift command signal; and
determining presence or absence of gear shifting to the speed-reducing side, and **characterized by** prohibiting said instruction of the gear shift operation to the speed-increasing side, from a timing at which it is determined that the gear has been shifted to the speed-reducing side, until a predetermined time passes therefrom.

7. The gear shift instruction method according to claim 6, further comprising:
a gear shift detection step of detecting a gear shift state in said transmission mechanism (2000); and
a step of prohibiting said instruction of the gear shift operation to the speed-increasing side, from the timing at which it is determined that the gear has been shifted to the speed-reducing side based on a detected result in said gear shift detection step, until the predetermined time passes therefrom.

8. The gear shift instruction method according to claim 6 or 7, further comprising:
a detection step of detecting a degree of demand for a driving force to said vehicle by said driver; and
a step of permitting said instruction of the gear shift operation, to the speed-increasing side when an absolute value of a difference between the degree of demand detected in said detection step and the degree of demand before the gear shifting becomes not greater than a predetermined degree before said predetermined time passes from the timing at which it is determined that the gear has been shifted to the speed-reducing side based on the detected result in said gear shift detection step.

9. The gear shift instruction method according to claim 8, further comprising a step of prohibiting said instruction of the gear shift operation to the speed-increasing side when a change rate of the degree of demand detected in said detection step becomes not less than a predetermined change rate before said predetermined time passes from the timing at which it is determined that the gear has been shifted to the speed-reducing side based on the detected result in said gear shift detection step, even if the absolute value of the difference between the degree of demand detected in said detection step and the degree of demand before said gear shifting is not greater than the predetermined degree.

10. The gear shift instruction method according to claim 6 or 7, wherein said transmission mechanism (2000) is the automatic transmission mechanism having the manual shift mode,
said gear shift instruction method further comprising:
a detection step of detecting a degree of demand for a driving force to said vehicle by said driver; and
a step of permitting said instruction of the gear shift operation to the speed-increasing side when the degree of demand detected in said detection step is smaller than a predetermined degree before said predetermined time passes from the timing at which it is determined that the gear has been shifted to the speed-reducing side based on the detected result in said gear shift detection step.

## Patentansprüche

1. Getriebeschaltanweisungsvorrichtung, die einem Fahrer eine Getriebeschaltbetätigung für einen Getriebemechanismus (2000) anweist, der an einem Fahrzeug montiert ist, und die ein Getriebeschalten während eines Vorwärtsfahrens in Übereinstimmung mit einer Betätigung des Fahrers ermöglicht, wobei der Getriebemechanismus (2000) einer von einem manuellen Getriebemechanismus und einem Automatikgetriebemechanismus mit einer manuellen Schaltbetriebsart ist, wobei die Getriebeschaltanweisungsvorrichtung Folgendes aufweist:
eine Anweisungseinrichtung (102) zum Anweisen einer Getriebeschaltbetätigung des Getriebemechanismus (2000) an den Fahrer; und
eine Steuereinrichtung (8000) zum Erzeugen eines Getriebeschaltsteuerbefehlsignals, das einem Zustand des Fahrzeugs unter Verwendung eines Getriebeschaltdiagramms entspricht, und zum Steuern der Anweisungseinrichtung (102), um eine Getriebeschaltbetätigung auf eine von einer geschwindigkeitserhöhenden Seite und einer geschwindigkeitsverringernden Seite des Getriebemechanismus (2000) basierend auf dem erzeugten Getriebeschaltsteuerbefehlsignal anzuweisen,
wobei die Steuereinrichtung (8000) eine Einrichtung zum Bestimmen einer Anwesenheit oder Abwesenheit eines Getriebeschaltens auf die geschwindigkeitsverringernde Seite aufweist und **dadurch gekennzeichnet, dass** die Steuereinrichtung (8000) ferner eine Einrichtung aufweist zum Verhindern der Anweisung der Getriebeschaltbetätigung auf die geschwindigkeitserhöhende Seite von einem Zeitpunkt an, an dem bestimmt ist, dass die Schaltstufe auf die geschwindigkeitsverringernde Seite geschaltet wurde, bis eine vorbestimmte Zeit von dort an verstrichen ist.

2. Getriebeschaltanweisungsvorrichtung nach Anspruch 1, ferner mit einer Getriebeschalterfassungseinrichtung (8002, 8020) zum Erfassen eines Getriebeschaltzustands in dem Getriebemechanismus (2000), wobei
die Steuereinrichtung (8000) eine Einrichtung zum Verhindern der Anweisung der Getriebeschaltbetätigung auf die geschwindigkeitserhöhende Seite aufweist, von dem Zeitpunkt an, an dem bestimmt ist, dass die Schaltstufe auf die geschwindigkeitsverringernde Seite geschaltet wurde, basierend auf einem erfassten Ergebnis der Getriebeschalterfassungseinrichtung (8002, 8020), bis die vorbestimmte Zeit von dort an verstrichen ist.

3. Getriebeschaltanweisungsvorrichtung nach Anspruch 1 oder 2, ferner mit einer Erfassungseinrichtung (8010) zum Erfassen eines Anforderungsgrads für eine Antriebeskraft an das Fahrzeug durch den Fahrer, wobei
die Steuereinrichtung (8000) eine Einrichtung zum Erlauben der Anweisung der Getriebeschaltbetätigung auf die geschwindigkeitserhöhende Seite aufweist, wenn ein absoluter Wert einer Differenz zwischen dem Anforderungsgrad, der durch die Erfassungseinrichtung (8010) erfasst ist, und dem Anforderungsgrad vor dem Getriebeschalten nicht größer als ein vorbestimmter Grad wird, bevor die vorbestimmte Zeit von dem Zeitpunkt an verstrichen ist, an dem bestimmt ist, dass die Schaltstufe auf die geschwindigkeitsverringernde Seite geschaltet wurde, basierend auf dem erfassten Ergebnis der Getriebeschalterfassungseinrichtung (8002, 8020).

4. Getriebeschaltanweisungsvorrichtung nach Anspruch 3, wobei die Steuereinrichtung (8000) eine Einrichtung zum Verhindern der Anweisung der Getriebeschaltbetätigung auf die geschwindigkeitserhöhende Seite aufweist, wenn eine Änderungsrate des Anforderungsgrads, der durch die Erfassungseinrichtung (8010) erfasst ist, nicht kleiner als eine vorbestimmte Änderungsrate wird, bevor die vorbestimmte Zeit von dem Zeitpunkt an verstrichen ist, an dem bestimmt ist, dass die Schaltstufe auf die geschwindigkeitsverringernde Seite geschaltet wurde, basierend auf dem erfassten Ergebnis der Getriebeschalterfassungseinrichtung (8002, 8020), selbst wenn der absolute Wert der Differenz zwischen dem Anforderungsgrad, der durch die Erfassungseinrichtung (8010) erfasst ist, und dem Anforderungsgrad vor dem Getriebeschalten nicht größer als der vorbestimmte Grad ist.

5. Getriebeschaltanweisungsvorrichtung nach Anspruch 1 oder 2, wobei der Getriebemechanismus (2000) der Automatikgetriebemechanismus mit der manuellen Schaltbetriebsart ist,
wobei die Getriebeschaltanweisungsvorrichtung ferner eine Erfassungseinrichtung (8010) zum Erfassen eines Anforderungsgrads für eine Antriebskraft an das Fahrzeug durch den Fahrer aufweist, wobei
die Steuereinrichtung (8000) eine Einrichtung zum Erlauben der Anweisung der Getriebeschaltbetätigung auf die geschwindigkeitserhöhende Seite aufweist, wenn der Anforderungsgrad, der durch die Erfassungseinrichtung (8010) erfasst ist, kleiner als ein vorbestimmter Grad ist, bevor die vorbestimmte Zeit von dem Zeitpunkt an verstrichen ist, an dem bestimmt ist, dass die Schaltstufe auf die geschwindigkeitsverringernde Seite geschaltet wurde, basierend auf dem erfassten Ergebnis der Getriebeschalterfassungseinrichtung (8002, 8020).

6. Getriebeschaltanweisungsverfahren zum Anweisen einer Getriebeschaltbetätigung für einen Getriebemechanismus (2000), der an einem Fahrzeug montiert ist, an einen Fahrer unter Verwendung einer Anzeigevorrichtung und Ermöglichen eines Getriebeschaltens während eines Vorwärtsfahrens in Übereinstimmung mit einer Betätigung des Fahrers, wobei der Getriebemechanismus (2000) einer von einem manuellen Getriebemechanismus und einem Automatikgetriebemechanismus mit einer manuellen Schaltbetriebsart ist, wobei das Getriebeschaltanweisungsverfahren die folgenden Schritte aufweist:
Anweisen einer Getriebeschaltbetätigung des Getriebemechanismus (2000) an den Fahrer;
Erzeugen eines Getriebeschaltsteuerbefehlsignals, das einem Zustand des Fahrzeugs unter Verwendung eines Getriebeschaltdiagramms entspricht, und Steuern der Anzeigevorrichtung, um eine Getriebeschaltbetätigung auf eine von einer geschwindigkeitserhöhenden Seite und einer geschwindigkeitsverringernden Seite des Getriebemechanismus (2000) basierend auf dem erzeugten Getriebeschaltsteuerbefehlsignal anzuweisen; und
Bestimmen einer Anwesenheit oder Abwesenheit eines Getriebeschaltens auf die geschwindigkeitsverringernde Seite, und **gekennzeichnet durch** ein Verhindern der Anweisung der Getriebeschaltbetätigung auf die geschwindigkeitserhöhende Seite von einem Zeitpunkt an, an dem bestimmt ist, dass die Schaltstufe auf die geschwndigkeitsverringernde Seite geschaltet wurde, bis eine vorbestimmte Zeit von dort an verstrichen ist.

7. Getriebeschaltanweisungsverfahren nach Anspruch 6, ferner mit:
einem Getriebeschalterfassungsschritt eines Erfassens eines Getriebeschaltzustands in dem Getriebemechanismus (2000); und
einem Schritt eines Verhinderns der Anweisung der Getriebeschaltbetätigung auf die geschwindigkeitserhöhende Seite von dem Zeitpunkt an, an dem bestimmt ist, dass die Schaltstufe auf die geschwindigkeitsverringernde Seite geschaltet wurde, basierend auf einem erfassten Ergebnis in dem Getriebeschalterfassungsschritt, bis die vorbestimmte Zeit von dort an verstrichen ist.

8. Getriebeschaltanweisungsverfahren nach Anspruch 6 oder 7, ferner mit:
einem Erfassungsschritt eines Erfassens eines Anforderungsgrads für eine Antriebskraft an das Fahrzeug durch den Fahrer; und
einem Schritt eines Erlaubens der Anweisung der Getriebeschaltbetätigung auf die geschwindigkeitserhöhende Seite, wenn ein absoluter Wert einer Differenz zwischen dem Anforderungsgrad, der in dem Erfassungsschritt erfasst wird, und dem Anforderungsgrad vor dem Getriebeschalten nicht größer als ein vorbestimmter Grad wird, bevor die vorbestimmte Zeit von dem Zeitpunkt an verstrichen ist, an dem bestimmt ist, dass die Schaltstufe auf die geschwindigkeitverringernde Seite geschaltet wurde, basierend auf dem erfassten Ergebnis in dem Getriebeschalterfassungsschritt.

9. Getriebeschaltanweisungsverfahren nach Anspruch 8, ferner mit einem Schritt eines Verhinderns der Anweisung der Getriebeschaltbetätigung auf die geschwindigkeitserhöhende Seite, wenn eine Änderungsrate des Anforderungsgrads, der in dem Erfassungsschritt erfasst wird, nicht kleiner als eines vorbestimmte Änderungsrate wird, bevor die vorbestimmte Zeit von dem Zeitpunkt an verstricken ist, an dem bestimmt ist, dass die Schaltstufe auf die geschwindigkeitsverringernde Seite geschaltet wurde, basierend auf dem erfassten Ergebnis in dem Getriebeschalterfassungsschritt, selbst wenn der absolute Wert der Differenz zwischen dem Anforderungsgrad, der in dem Erfassungsschritt erfasst wird, und dem Anforderungsgrad vor dem Getriebeschalten nicht größer als der vorbestimmte Grad ist.

10. Getriebeschaltanweisungsverfahren nach Anspruch 6 oder 7, wobei der Getriebemechanismus (2000) der Automatikgetriebemechanismus mit der manuellen Schaltbetriebsart ist,
wobei das Getriebeschaltanweisungsverfahren ferner Folgendes aufweist:
einen Erfassungsschritt eines Erfassens eines Anforderungsgrads für eine Antriebskraft an das Fahrzeug durch den Fahrer; und
einen Schritt eines Erlaubens der Anweisung der Getriebeschaltbetätigung auf die geschwindigkeitserhöhende Seite, wenn der Anforderungsgrad, der in dem Erfassungsschritt erfasst wird, kleiner als ein vorbestimmter Grad ist, bevor die vorbestimmte Zeit von dem Zeitpunkt an verstrichen ist, an dem bestimmt ist, dass die Schaltstufe auf die geschwindigkeitsverringernde Seite geschaltet wurde, basierend auf dem erfassten Ergebnis in dem Getriebeschalterfassungsschritt.

## Revendications

1. Dispositif d'instruction de changement de vitesse, demandant à un conducteur d'exécuter une opération de changement de vitesse pour un mécanisme de transmission (2000) monté sur un véhicule et permettant un changement de vitesse lors d'une marche avant conformément à une opération du conducteur, ledit mécanisme de transmission (2000) étant l'un d'un mécanisme de transmission manuel et d'un mécanisme de transmission automatique ayant un mode de changement manuel, le dispositif d'instruction de changement de vitesse comprenant :
un moyen d'instruction (102) pour demander audit conducteur d'exécuter une opération de changement de vitesse dudit mécanisme de transmission (2000); et
un moyen de commande (8000) pour générer un signal de commande de changement de vitesse correspondant à un état dudit véhicule en utilisant un diagramme de changement de vitesse et pour commander ledit moyen d'instruction (102) pour demander l'exécution d'une opération de changement de vitesse soit côté augmentation de vitesse ou côté réduction de vitesse dudit mécanisme de transmission (2000) sur la base dudit signal de commande de changement de vitesse généré,
ledit moyen de commande (8000) comportant un moyen pour déterminer la présence ou l'absence de changement de vitesse côté réduction de vitesse et **caractérisé en ce que** le moyen de commande (8000) comporte en plus un moyen pour interdire ladite instruction de l'opération de changement de vitesse côté augmentation de vitesse, d'un instant auquel on détermine que la vitesse a été changée côté réduction de vitesse, jusqu'à ce qu'une durée prédéterminée depuis cet instant.

2. Dispositif d'instruction de changement de vitesse selon la revendication 1, comprenant en plus un moyen de détection de changement de vitesse (8002, 8020) pour détecter un état de changement de vitesse dans ledit mécanisme de transmission (2000), où
ledit moyen de commande (8000) comporte un moyen pour interdire ladite instruction de l'opération de changement de vitesse côté augmentation de vitesse, à partir de l'instant auquel on détermine que la vitesse a été changée côté réduction de vitesse sur la base d'un résultat détecté dudit moyen de détection de changement de vitesse (8002, 8020), jusqu'à ce que la durée prédéterminée s'écoule depuis cet instant.

3. Dispositif d'instruction de changement de vitesse selon la revendication 1 ou 2, comprenant en plus un moyen de détection (8010) pour détecter un degré de demande d'une force d'entraînement audit véhicule par ledit conducteur, où
ledit moyen de commande (8000) comporte un moyen pour permettre ladite instruction de l'opération de changement de vitesse côté augmentation de vitesse lorsqu'une valeur absolue d'une différence entre le degré de demande détecté par ledit moyen de détection (8010) et le degré de demande avant le changement de vitesse ne dépasse un degré prédéterminé avant que ladite durée prédéterminée ne s'écoule depuis l'instant auquel on détermine que la vitesse a été changée côté réduction de vitesse sur la base du résultat détecté dudit moyen de détection de changement de vitesse (8002, 8020).

4. Dispositif d'instruction de changement de vitesse selon la revendication 3, dans lequel ledit moyen de commande (8000) comporte un moyen pour interdire ladite instruction de l'opération de changement de vitesse côté augmentation de vitesse lorsqu'un taux de changement du degré de demande détecté par ledit moyen de détection (8010) devient non inférieur à un taux de changement prédéterminé avant que ladite durée prédéterminée ne s'écoule depuis l'instant auquel on détermine que la vitesse a été changée côté réduction de vitesse sur la base du résultat détecté dudit moyen de détection de changement de vitesse (8002, 8020), même si la valeur absolue de la différence entre le degré de demande détecté par ledit moyen de détection (8010) et le degré de demande avant ledit changement de vitesse n'est pas supérieure au degré prédéterminé.

5. Dispositif d'instruction de changement de vitesse selon la revendication 1 ou 2, dans lequel ledit mécanisme de transmission (2000) est le mécanisme de transmission automatique ayant le mode de changement manuel,
ledit Dispositif d'instruction de changement de vitesse comprenant en plus un moyen de détection (8010) pour détecter un degré de demande d'une force d'entraînement audit véhicule par ledit conducteur, où
ledit moyen de commande (8000) comporte un moyen pour permettre ladite instruction de l'opération de changement de vitesse côté augmentation de vitesse lorsque le degré de demande détecté par ledit moyen de détection (8010) est inférieur à un degré prédéterminé avant que ladite durée prédéterminée ne s'écoule depuis l'instant auquel on détermine que la vitesse a été changée côté réduction de vitesse sur la base du résultat détecté dudit moyen de détection de changement de vitesse (8002, 8020).

6. Procédé d'instruction de changement de vitesse pour demander à un conducteur, en utilisant un dispositif d'affichage, d'exécuter une opération de changement de vitesse pour un mécanisme de transmission (2000) monté sur un véhicule et permettant un changement de vitesse lors d'une marche avant conformément à une opération du conducteur, ledit mécanisme de transmission (2000) étant l'un d'un mécanisme de transmission manuel et d'un mécanisme de transmission automatique ayant un mode de changement manuel, le procédé d'instruction de changement de vitesse comprenant les étapes qui consistent
à demander l'exécution d'une opération de changement de vitesse dudit mécanisme de transmission (2000) audit conducteur ;
à générer un signal de commande de changement de vitesse correspondant à un état dudit véhicule en utilisant un diagramme de changement de vitesse, et à commander ledit dispositif d'affichage pour demander l'exécution d'une opération de changement de vitesse soit côté augmentation de vitesse soit côté réduction de vitesse dudit mécanisme de transmission (2000) sur la base dudit signal de commande de changement de vitesse ; et
à déterminer la présence ou l'absence d'un changement de vitesse côté réduction de vitesse, et **caractérisé par** le fait d'éviter ladite instruction de l'opération de changement de vitesse côté augmentation de vitesse, d'un instant auquel on détermine que la vitesse a été changée côté réduction de vitesse, jusqu'à ce qu'une durée prédéterminée ne s'écoule depuis cet instant.

7. Procédé d'instruction de changement de vitesse selon la revendication 6, comprenant en plus :
une étape de détection de changement de vitesse qui consiste à détecter un état de changement de vitesse dans ledit mécanisme de transmission (2000) ; et
une étape qui consiste à interdire ladite instruction de l'opération de changement de vitesse côté augmentation de vitesse, à partir de l'instant auquel on détermine que la vitesse a été changée côté réduction de vitesse sur la base d'un résultat détecté dans ladite étape de détection de changement de vitesse, jusqu'à ce que la durée prédéterminée ne s'écoule depuis cet instant.

8. Procédé d'instruction de changement de vitesse selon la revendication 6 ou 7, comprenant en plus :
une étape de détection qui consiste à détecter un degré de demande d'une force d'entraînement audit véhicule par ledit conducteur ; et
une étape qui consiste à permettre ladite instruction de l'opération de changement de vitesse côté augmentation de vitesse lorsqu'une valeur absolue d'une différence entre le degré de demande détecté dans ladite étape de détection et le degré de demande avant le changement de vitesse ne dépasse un degré prédéterminé avant que ladite durée prédéterminée ne s'écoule depuis l'instant auquel on détermine que la vitesse a été changée côté réduction de vitesse sur la base du résultat détecté dans ladite étape de détection de changement de vitesse.

9. Procédé d'instruction de changement de vitesse selon la revendication 8, comprenant en plus une étape qui consiste à interdire ladite instruction de l'opération de changement de vitesse côté augmentation de vitesse lorsqu'un taux de changement du degré de demande détecté dans ladite étape de détection devient non inférieur à un taux de changement prédéterminé avant que ladite durée prédéterminée ne s'écoule depuis l'instant auquel on détermine que la vitesse a été changée côté réduction de vitesse sur la base du résultat détecté dans ladite étape de détection de changement de vitesse, même si la valeur absolue de la différence entre le degré de demande détecté dans ladite étape de détection et le degré de demande avant ledit changement de vitesse n'est pas supérieure au degré prédéterminé.

10. Procédé d'instruction de changement de vitesse selon la revendication 6 ou 7, dans lequel ledit mécanisme de transmission (2000) est le mécanisme de transmission automatique ayant le mode de changement manuel,
ledit procédé d'instruction de changement de vitesse comprenant en plus :
une étape de détection qui consiste à détecter un degré de demande d'une force d'entraînement audit véhicule par ledit conducteur, et
une étape qui consiste à permettre ladite instruction de l'opération de changement de vitesse côté augmentation de vitesse lorsque le degré de demande détecté dans ladite étape de détection est inférieur à un degré prédéterminé avant que ladite durée prédéterminée ne s'écoule depuis l'instant auquel on détermine que la vitesse a été changée côté réduction de vitesse sur la base du résultat détecté dans ladite étape de détection de changement de vitesse.
